(19) Europäisches Patentamt
European Patent Office
Office européen des brevets

(11) **EP 1 600 888 A2**

(12) **EUROPEAN PATENT APPLICATION**

(43) Date of publication:
**30.11.2005 Bulletin 2005/48**

(51) Int Cl.$^7$: **G06N 3/12**

(21) Application number: **05001048.7**

(22) Date of filing: **19.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **25.05.2004 JP 2004155115**
**17.12.2004 JP 2004365228**

(71) Applicant: **Oki Electric Industry Co., Ltd.**
**Tokyo (JP)**

(72) Inventors:
• **Baba, Shunsuke**
**16-1 Onogawa Tsukuba-shi Ibaraki-ken 305 (JP)**
• **Wada, Tetsunori**
**16-1 Onogawa Tsukuba-shi Ibaraki-ken 305 (JP)**

(74) Representative: **Pfenning, Meinig & Partner GbR**
**Mozartstrasse 17**
**80336 München (DE)**

(54) **Fitness function circuit, genetic algorithm machine and fitness evaluation method**

(57) An optimization method for extracting a model parameter in a semiconductor circuit. A fitness function circuit 15 installed in a genetic algorithm machine 900 is provided with an evaluated value calculation section 21, which receives an offspring model parameter from an offspring model parameter file 44, obtains k model evaluated values based on the offspring model parameter received, and stores the k model evaluated values in an evaluatedvalue file 32 in a storage section 17. The fitness function circuit 15 is also provided with an area calculation section 22, which reads the k model evaluated values stored in the evaluated value file 32 by the evaluated value calculation section 21, calculates the size of an area formed by the k model evaluated values read, and stores the size of the area in an area value file 33 in the storage section 17. The fitness function circuit 15 is also provided with a fitness evaluation section 23, which reads the size of the area stored in the area value file 33 by the area calculation section 22, evaluates fitness of the offspring model parameter based on the size of the area read, and stores the fitness in a fitness file 34 in the storage section 17.

Fig. 3

EP 1 600 888 A2

**Description**

BACKGROUND OF THE INVENTION

1. Field of the Invention

The present invention relates to fitness evaluation for a genetic algorithm machine. For example, the present invention relates to an optimization technique including a method of comparing the areas of two functions as an evaluation method of fitness. More particularly, the present invention relates to parameter extracting equipment for a semiconductor circuit, which is used for a model parameter optimization in a circuit simulator that is designed mainly for circuit design.

2. Description of the Related Art

In the design phase of a large-scale integrated circuit, a circuit simulation is performed using a circuit simulator. A circuit simulator, in general, includes a semiconductor device model f (P) for simulating the actual electrical characteristics. For a highly accurate circuit simulation, it is required for the semiconductor device model f(P) to simulate the electrical characteristics of an observed device highly accurately. Now, since the device model f(P) has a constituent factor of a model parameter $P = \{p_1, p_2, ..., p_n\}$ that includes n components, it is required that f(P) determine a model parameter $\{p_1, p_2, ..., p_n\}$ that can simulate measured electrical characteristics of a device highly accurately.

Techniques of extracting the model parameter $\{p_1, p_2, ..., p_n\}$ highly accurately from observed data include a genetic algorithm based method as described in references in Nonpatent Literature 1 and Nonpatent Literatures 2.

The following shows a conventional method of fitness evaluation.

**[Equation 1]**

**Method 1.**

**Model of Nonpatent Literature 1:** $\quad g = \sum_{i} (\dfrac{I_d - f(P, x_i)}{I_d})$

**Method 2.**

**Model of Nonpatent Literature 2:** $\quad g = \sum_{i} (\dfrac{I_d - f(P, x_i)}{(x_i - x_{i-1}) \cdot f(P, x_i)})$

In the equations, x denotes an applied voltage to a device, f(P,x) denotes a model evaluated value that is obtained by calculating the model parameter $P = \{p_1, p_2, ..., p_n\}$ and x, and $I_d$ denotes the value of electrical characteristics of an observed device. Now, the equations are calculated at every evaluation point, thereby obtaining fitness g.

[Nonpatent Literature 1] V. Melikian, V. Mnatsakanian, and N. Uzunoglou, "Optimization of SPICE System LEVEL 3 MOSFET Transistor Models Based on DC Measurements," Microelectronics Journal 29 (1998), pp. 151-156.

[Nonpatent Literature 2] Josef Watts, Calvin Bittner, Douglas Heaberlin, and James Hoffmann,"Extraction of Compact Model Parameters for ULSI MOSFETs Using a Genetic Algorithm" , Technical Proceedings of the 1999 International Conference on Modeling and Simulation of Microsystems, pp. 697.

The conventional genetic algorithm based method may lead to incorrect selection of parameters of highest fitness to be selected.

SUMMARY OF THE INVENTION

The present invention is directed to improving fitness evaluation method involving a genetic algorithm based calculation. For instance, it is to propose a method that allows extracting a model parameter that matches an observed value with high accuracy in the optimization of a model function parameter representing observed data.

These and other objects of the embodiments of the present invention are accomplished by the present invention as hereinafter described in further detail.

According to one aspect of the present invention, a fitness function circuit used for genetic algorithms receives a model parameter, obtains a model evaluated value, and outputs fitness for a specific problem. The fitness function circuit may include,

an evaluated value calculation section, which receives the model parameter, for obtaining the model evaluated value based on the model parameter received, and storing the model evaluated value in a storage section;

an area calculation section, which reads the model evaluated value stored in the storage section by the evaluated value calculation section, for calculating the size of an area that is formed by the model evaluated value read, and storing the size of the area in the storage section; and

a fitness evaluation section, which reads the size of the area stored in the storage section by the area calculation section, for evaluating the fitness of the model parameter based on the size of the area read, and storing the fitness in the storage section.

The area calculation section may calculate an area based on a true value and an area based on the model evaluated value, and store the areas in the storage section. Then, the fitness evaluation section may evaluate the fitness according to a difference between the area based on the true value and the area based on the model evaluated value.

The evaluated value calculation section may calculate a model evaluated value $f(P, x_i)$ based on a model parameter P and a variable value $x_i$ where P denotes a model parameter that has n components $\{p_1, p_2, ..., p_n\}$, x denotes a variable, $x_i$ denotes a variable value, f denotes a function with variables of the model parameter P and the variable value $x_i$, and $f(P, x_i)$ denotes the model evaluated value. Then, the area calculation section may calculate, for every i, a first area that is based on the variable value $x_i$, a variable value $x_{i+1}$, a true value $I_d (x_i)$ and a true value $I_d (x_{i+1})$ and a second area that is based on the variable value $x_i$, the variable value $x_{i+1}$, the model evaluated value $f(P, x_i)$ and a model evaluated value $f(P, x_{i+1})$ where $I_d(x_i)$ denotes the true value of the variable value $x_i$, g denotes the fitness, and i=1, 2, ..., k. Then, the fitness evaluation section may calculate a difference between the first area and the second area and calculate a sum of differences between the areas calculated for the every i as the fitness.

The area calculation section may calculate an area enclosed with a true value and the model evaluated value, and store the area enclosed with the true value and the model evaluated value in the storage section. Then, the fitness evaluation section may evaluate the fitness based on the area enclosed with the true value and the model evaluated value.

The evaluated value calculation section may calculate a model evaluated value $f(P, x_i)$ based on a model parameter P and a variable value $x_i$ where P denotes a model parameter that has n components $\{p_1, p_2, ..., p_n\}$, x denotes a variable, $x_i$ denotes a variable value, f denotes a function with variables of the model parameter P and the variable value $x_i$, and $f(P, x_i)$ denotes the model evaluated value. Then, the area calculation section may calculate, for every i, a first area that is based on the variable value $x_i$, a variable value $x_{i+1}$, a true value $I_d (x_i)$ and a true value $I_d (x_{i+1})$ and a second area that is based on the variable value $x_i$, the variable value $x_{i+1}$, the model evaluated value $f(P, x_i)$ and a model evaluated value $f(P,x_{i+1})$ where $I_d(x_i)$ denotes the true value of the variable value $x_i$, g denotes the fitness, and i=1, 2, ..., k. Then, the fitness evaluation section may calculate a difference between the first area and the second area and calculates a sum of absolute values of differences between the areas calculated for the every i as the fitness.

According to another aspect of the present invention, a genetic algorithm machine executes a genetic algorithm using a model parameter. Then, the genetic algorithm machine includes,

a population memory for storing a population of model parameters having fitness;

a select section for selecting a parent model parameter from among the population of model parameters stored in the population memory;

a crossover module for crossing parent model parameters selected by the select section and producing an offspring model parameter; and

a fitness function circuit for evaluating the fitness for a specific problem of the offspring model parameter obtained from the crossing by the crossover module.

Then, the fitness function circuit may include,

an evaluated value calculation section, which receives the offspring model parameter, for calculating k model evaluated values based on the offspring model parameter received, and storing the k model evaluated values in a storage section;

an area calculation section, which reads a model evaluated value stored in the storage section by the evaluated value calculation section, for calculating the size of an area formed by the model evaluated value read, and storing the size of the area in the storage section; and

a fitness evaluation section, which reads the size of the area stored in the storage section by the area calculation section, for evaluating the fitness of the offspring model parameter based on the size of the area read, and storing the fitness in the storage section.

According to still another aspect of the present invention, a fitness evaluation method is used by a fitness function circuit that is installed in a genetic algorithm machine. The fitness evaluation method may include,

retrieving a variable value string and an observed data string corresponding to the variable value string from a storage section, calculating the size of an area based on observed data using the variable value string and the observed data string, and storing the size of the area based on the observed data calculated in the storage section;

retrieving the variable value string and a model parameter from the storage section, calculating a model evaluated value string using the variable value string and the model parameter, calculating the size of an area based on the model parameter using the variable value string and the model evaluated value string, and storing the size of the area based on the model parameter calculated in the storage section; and

retrieving from the storage section the size of the area based on the observed data and the size of the area based on the model parameter, evaluating fitness of the model parameter based on a difference between the sizes, and storing the fitness in the storage section.

The fitness evaluation method may include,

calculating the size of an area formed by a minimum value of the variable value string, a maximum value of the variable value string, the observed data string, and an X-axis, according to a two-dimensional coordinate graph where the X-axis indicates the variable value string and a Y-axis indicates the observed data string, for the size of the area based on the observed data;

calculating the size of an area formed by the minimum value of the variable value string, the maximum value of the variable value string, the model evaluated value string, and an X-axis, according to a two-dimensional coordinate graph where the X-axis indicates the variable value string and a Y-axis indicates the model evaluated value string, for the size of the area based on model parameter; and

storing the sizes in the storage section.

According to still another aspect of the present invention, a fitness evaluation method is used by a fitness function circuit that is installed in a genetic algorithm machine. The genetic algorithm machine may include,

retrieving a variable value sting and a model parameter from a storage section, and calculating a model evaluated value string based on the variable value sting and the model parameter;

retrieving an observed data string corresponding to the variable value string from the storage section; and

calculating fitness of the model parameter based on an absolute value of a difference between the observed data string and the model evaluated value string, and storing the fitness in the storage section.

The fitness evaluation method may include evaluating the fitness by obtaining a value by integrating the absolute value of the difference between the observed data string and the model evaluated value string.

According to this invention, fitness is evaluated based on size of area. For instance, in the extraction of a model parameter from observed data, the value of a model calculated based on an extracted parameter and the observed data (a true value) almost match like a visual match. This may eliminate incorrect selection of parameters.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWINGS

The present invention will become more fully understood from the detailed description given hereinafter and the accompanying drawings which are given by way of illustration only, and thus are not limitative of the present invention, and wherein:

Fig. 1 is an exterior view of a genetic algorithm machine according to a first embodiment;

Fig. 2 is a diagram showing a hardware architecture of the genetic algorithm machine according to the first embodiment;

Fig. 3 is a diagram showing a logical configuration of an genetic algorithm machine 900;

Fig. 4 is a chart showing an operation of the genetic algorithm machine 900;

Fig. 5 is a diagram showing areas Sd and Sf that are enclosed with respective function values;

Fig. 6 is a diagram showing a relationship between an applied voltage x and a value $I_d$ of electrical characteristics of a device;

Fig. 7 is a chart of numerical values of true values, evaluated values-1, and evaluated values-2 shown in Fig. 6;

Fig. 8 is a chart of differences between true values and values obtained by assigning the evaluated values-1 with Methods 1, 2, and 3, respectively;

Fig. 9 is a chart of differences between true values and values obtained by assigning the evaluated values-2 with Methods 1, 2, and 3, respectively;

Fig. 10 is a diagram showing a relationship between an applied voltage x and a value $I_d$ of electrical characteristics of a device;

Fig. 11 is a chart of numerical values of true values, evaluated values-1, and evaluated values-2 shown in Fig. 10;

Fig. 12 is a chart of differences between true values and values obtained by assigning the evaluated values-1 with Methods 1, 2, and 3, respectively;

Fig. 13 is a chart of differences between true values and values obtained by assigning the evaluated values-2 with Methods 1, 2, and 3, respectively;

Fig. 14 is a chart of fitness g, which is evaluated based on the results of Fig. 7 and Fig. 8 with Method 1 and Method 2 of the conventional art, and Method 3 of the first embodiment, respectively;

Fig. 15 is a chart of fitness g, which is evaluated based on the results of Fig. 11 through Fig. 13 with Method 1 and Method 2 of the conventional art, and Method 3 of this embodiment, respectively;

Fig. 16 is a diagram showing a relationship between an applied voltage x and a value $I_d$ of electrical characteristics of a device;

Fig. 17 is a chart of numerical values of true values, evaluated values-A, and evaluated values-B shown in Fig. 16;

Fig. 18 is a chart with Method 1 illustrating differences between true values and values obtained by assigning the evaluated values-A or values obtained by assigning the evaluated values-B;

Fig. 19 is a chart with Method 3 illustrating differences between true values and values obtained by assigning the evaluated values-A or values obtained by assigning the evaluated values-B;

Fig. 20 is a chart with Method 4 illustrating differences between true values and values obtained by assigning the evaluated values-A or values obtained by assigning the evaluated values-B;

Fig. 21 shows an effect in the case of using the proposed Method 4 of this invention;

Fig. 22 shows differences in areas between true values $I_d(x)$ and the evaluated values $f(P,x)$; and

Fig. 23 shows differences in areas between true values $I_d(x)$ and the evaluated values $f(P,x)$.

DETAILED DESCRIPTION OF THE PREFERRED EMBODIMENTS

Reference will now be made in detail to the present preferred embodiments of the invention, examples of which are illustrated in the accompanying drawings, wherein like reference numerals indicate like devices through out the several views.

Embodiment 1.

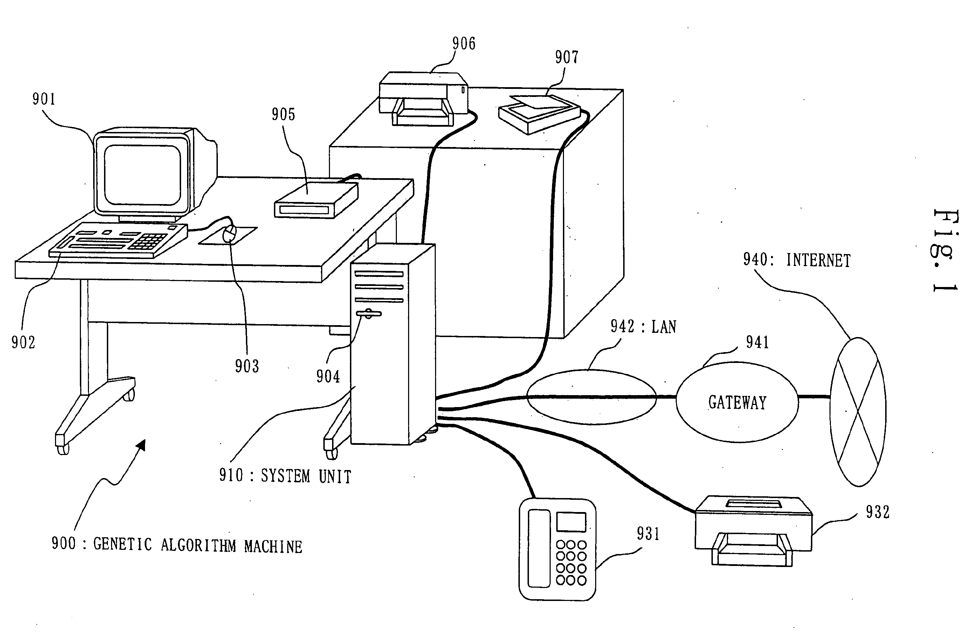

Fig. 1 is an exterior view of a genetic algorithm machine according to a first embodiment.

With referring to Fig. 1, a genetic algorithm machine 900 is provided with a system unit 910, a CRT (Cathode Ray Tube) display 901, a keyboard (K/B) 902, a mouse 903, a compact disk drive (CDD) 905, a printer 906, and a scanner 907,which are connected to one another by cables.

Also, the genetic algorithm machine 900 is connected to a FAX machine 932 and a telephone machine 931 by cables, and connected also to the Internet 940 via a local area network (LAN) 942 and a gateway 941.

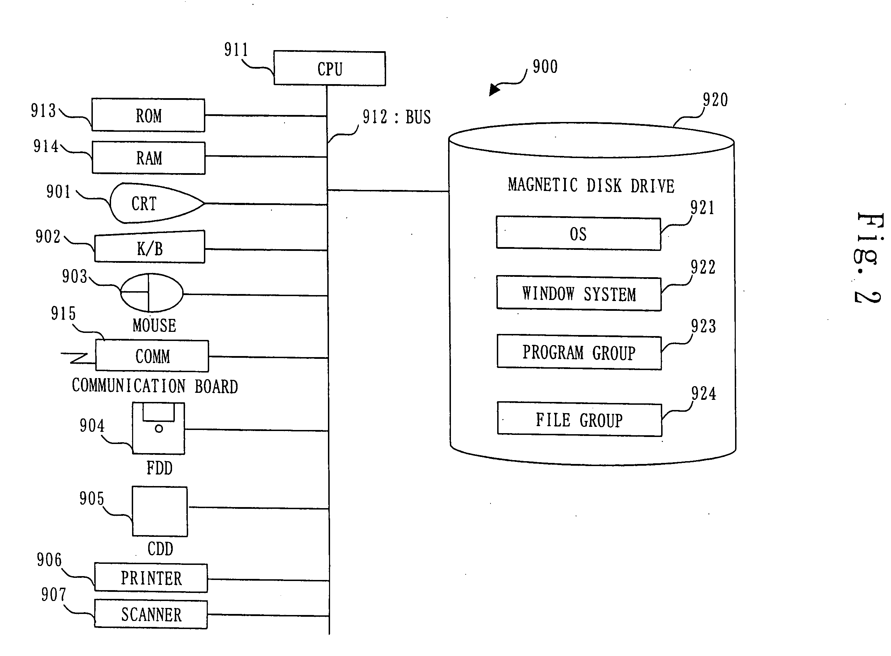

Fig. 2 is a diagram illustrating a hardware architecture of the genetic algorithm machine according to the first embodiment.

With referring to Fig. 2, the genetic algorithm machine 900 has a CPU (Central Processing Unit) 911 for executing programs. The CPU 911 is connected to a ROM 913, a RAM 914, a communication board 915, the CRT display 901, the K/B 902, the mouse 903, an FDD (Flexible Disk Drive) 904, a magnetic disk drive 920, the CDD 905, the printer 906, and the scanner 907 via a bus 912.

The RAM 914 is an example of volatile memory. The ROM 913, the FDD 904, the CDD 905, and the magnetic disk drive 920 are examples of nonvolatile memory. Those are examples of storage devices or storage sections.

The communication board 915 is connected to the FAX machine 932, the telephone machine 931, the LAN 942, etc.

For instance, the communication board 915, the K/B 902, the FDD 904, and the scanner 907 are examples of input sections.

For instance, the communication board 915 and the CRT display 901 are examples of output sections.

Now, the communication board 915 may alternatively be connected directly to the Internet 940 or a WAN (Wide Area Network) such as ISDN, instead of being connected to the LAN 942. If the communication board 915 has a direct connection to the Internet 940 or a WAN such as ISDN, then the genetic algorithm machine 900 is connected to the Internet 940 or a WAN such as ISDN. This eliminates the use of the gateway 941.

The magnetic disk drive 920 stores an operating system (OS) 921, a window system 922, a program group 923, and a file group 924. The program group 923 is executed by the CPU 911, the OS 921, and the window system 922.

The program group 923 stores programs that execute the functions that will be described as a "section", a "device", a "module", an "operator", and a "circuit" in later descriptions of the embodiment. The programs are retrieved by the CPU 911 to be executed.

The file group 924 stores a "judgement result", a "calculation result", and a "process result" that will be illustrated in later descriptions of the embodiment each as a "file".

Then, arrows in a flow chart that will be described in later descriptions of the embodiment mainly indicate data inputs/outputs. For the data input/output, data is stored in FD (Flexible Disk), Optical Disk, CD (Compact Disk), MD (Mini Disk), DVD (Digital Versatile Disk), or other types of storage media. Alternatively, data may be transmitted over a signal line or other types of transmission media.

Then, equipment that will be explained as a "section", a "device", a "module", an "operator", or a "circuit" in later descriptions of the embodiment may be implemented in firmware that is stored in the ROM 913. Alternatively, they may be implemented in software only, hardware only, a combination of software and hardware, or a combination of software, hardware and firmware.

Then, programs to implement the embodiment discussed hereinafter may be stored using a storage device such as the magnetic disk drive 920, FD (Flexible Disk), Optical Disk, CD (Compact Disk), MD (Mini Disk), DVD (Digital Versatile Disk) or other types of storage media.

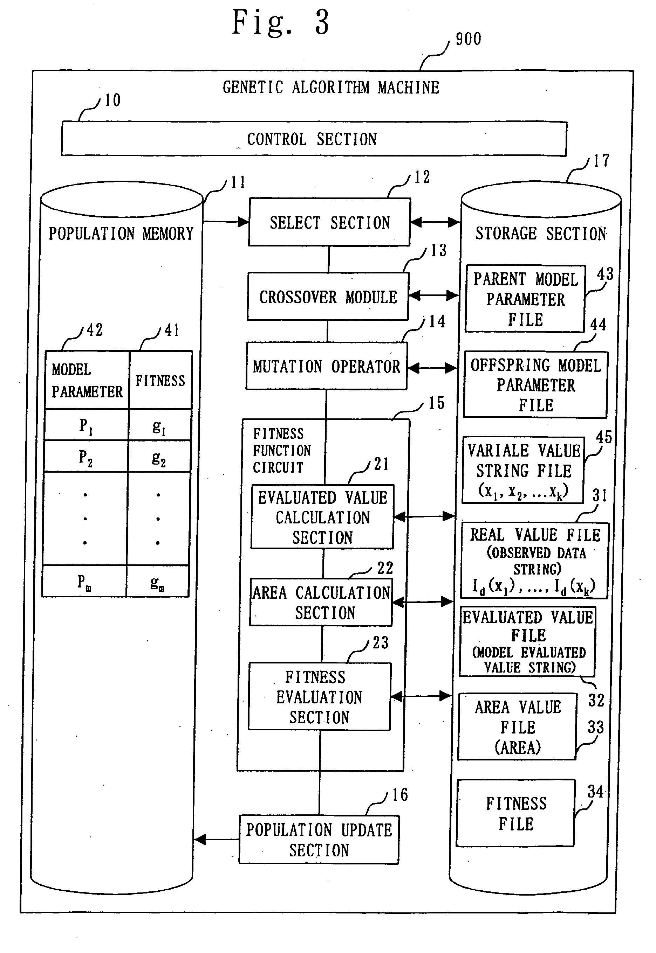

Fig. 3 is a diagram illustrating a logical configuration of the genetic algorithm machine 900.

The genetic algorithm machine 900 executes a genetic algorithm using the model parameter P. It is assumed here that one model parameter P has n component parameters $\{p_1, p_2, ..., p_n\}$.

The genetic algorithm machine 900 is provided with a control section 10, which controls respective sections that will be discussed hereinafter and executes operations that will be discussed hereinafter. This control may be implemented by the CPU 911, firmware, and the program group 923.

The genetic algorithm machine 900 is also provided with a population memory 11, which stores a population of model parameters 42, $P_1, P_2, ..., P_m$, each provided with fitness 41.

The genetic algorithm machine 900 is also provided with a storage section 17, which stores various types of files. The storage section 17 stores a variable value string $(x_1, x_2, ..., x_k)$ in a variable value string file 45. The storage section 17 also stores an observed data string, which is corresponding to the variable value string, in a true value file 31 as a true value string $(I_d(x_1), ..., I_d(x_k))$.

The population memory 11 and the storage section 17 may be implemented by a storage device such as the magnetic disk drive 920.

The genetic algorithm machine 900 is provided with a select section 12, which selects a parent model parameter from among the population of model parameters 42 stored in the population memory 11, and stores the parent model parameter in a parent model parameter file 43 in the storage section 17.

The genetic algorithm machine 900 is also provided with a crossover module 13, which crosses parent model parameters selected by the select section 12, thereby producing an offspring model parameter, and stores the offspring model parameter in an offspring model parameter file 44 in the storage section 17.

The genetic algorithm machine 900 is also provided with a mutation operator 14, which mutates the offspring model parameter stored in the offspring model parameter file 44. The mutation operator 14 is optional.

The genetic algorithm machine 900 is also provided with a fitness function circuit 15, which retrieves from the offspring model parameter file 44 the offspring model parameter mutated by the mutation operator 14 or the offspring model parameter crossed by the crossover module 13, evaluates the fitness of the offspring model parameter for a specific problem, and stores the fitness in a fitness file 34 in the storage section 17.

The genetic algorithm machine 900 is also provided with a population update section 16, which retrieves the fitness evaluated by the fitness function circuit 15 and stored in the fitness file 34, selects an offspring model parameter with a high level of fitness based on the fitness, and updates the population memory 11.

A configuration of the fitness function circuit 15 will now be described.

The fitness function circuit 15 is provided with an evaluated value calculation section 21, which receives an offspring model parameter from the offspring model parameter file 44, obtains k model evaluated values based on the offspring model parameter received, and stores the k model evaluated values in an evaluated value file 32 in the storage section 17.

The fitness function circuit 15 is also provided with an area calculation section 22, which reads the k model evaluated values stored in the evaluated value file 32 by the evaluated value calculation section 21, calculates the size of an area formed by the k model evaluated values read, and stores the size of the area in an area value file 33 in the storage section 17.

The fitness function circuit 15 is also provided with a fitness evaluation section 23, which reads the size of the area stored in the area value file 33 by the area calculation section 22, evaluates the fitness of the offspring model parameter based on the size of the area read, and stores the fitness in the fitness file 34 in the storage section 17.

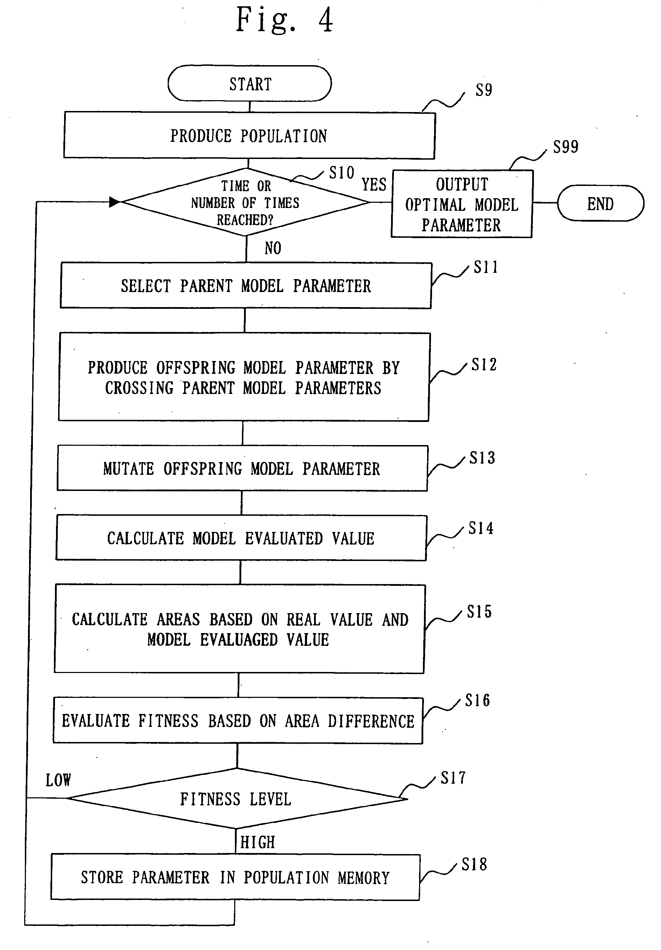

Fig. 4 is a diagram illustrating an operation of the genetic algorithm machine 900.

In the extraction of a model parameter using a genetic algorithm, the optimization of the combination of parameter devices is performed, assuming that a device of the model parameter P is a gene.

The following is the procedure for this case.

S9: The control section 10 forms at random parent populations $\{p_1, p_2, ..., p_n\}_m$ including 1000 sets (m=1000), for example, of a model parameter P in the population memory 11. The control section 10 also sets an operating time of the genetic algorithm. Time may be replaced by the number of times to be set.

S10: The control section 10 repeats the following operations from S11 to S18 until the operating time or number of times of the genetic algorithm is reached.

S11: The select section 12 selects two parent model parameters, for example, from among the parent populations including the m sets of model parameters P in the population memory 11 as parent individuals, and stores the two parent model parameters in the parent model parameter file 43.

S12: The crossover module 13 crosses the two parent individuals selected, produces ten (j = 1, 2, ..., 10) offspring model parameters, for example, as a new population of parameters $\{p_1, p_2, ..., p_n\}_j$, and stores the new population of parameters in the offspring model parameter file 44.

S13: The mutation operator 14 changes a parameter value or inverts a bit value at a random position of the offspring model parameter stored in the offspring model parameter file 44, if necessary, for mutation.

S14-S16: The fitness function circuit 15 evaluates fitness for desired electrical characteristics based on the newly produced population of ten parameters $\{p_1, p_2, ..., p_n\}_j$, and stores the fitness in the fitness file 34.

In S14, the evaluated value calculation section 21 calculates the model evaluated value $f(P, x_i)$ for each offspring model parameter P of the new population of ten parameters. The evaluated value calculation section 21 receives an offspring model parameter, and obtains k model evaluated values $f(P, x_i)$ (i = 1, 2, ..., k) based on the offspring model parameter received using a predetermined function f, and stores the k model evaluated values in the evaluated value file 32 as a model evaluated value string.

In S15, the area calculation section 22 calculates an area based on true value and an area based on model evaluated value.

First, the area calculation section 22 retrieves the variable value string, $x_1, x_2, ..., x_k$, from the variable value string file 45, retrieves the observed data string, $I_d(x_1), ..., I_d(x_k)$, corresponding to the variable value string from the true value file 31, calculates the size of an area based on observed data using the variable value string and the observed data string, and stores in the area value file 33 the size of the area based on observed data calculated.

The area calculation section 22 also retrieves the k model evaluated values $f(P, x_i)$ (i = 1, 2, ..., k) from the evaluated value file 32, calculates the size of the area based on model parameter using the variable value string and the model evaluated value string, and stores in the area value file 33 the size of the area based on model parameter calculated.

In S16, the fitness evaluation section 23 evaluates the fitness based on a difference between the area based on true value and the area based on model parameter.

The fitness evaluation section 23 reads the area based on observed data and the area based on model parameter stored in the area value file 33, calculates the difference between the areas read as the fitness of the offspring model parameter, and stores the fitness in the fitness file 34.

S17: The population update section 16 selects a parameter set having the highest fitness from among the new population of ten parameters $\{p_1, p_2, ..., p_n\}_j$ and a parameter set selected by a random number. Note that there are a variety of possible conditions for updating this population memory 11. For example, if the highest fitness among the new population of parameters is still lower than the lowest fitness among the model parameters of the population memory 11, then no selection is required and the process goes back to S10.

S18: The population update section 16 returns the parameter set selected in S17 to the parent populations of parameters $\{p_1, p_2, ..., p_n\}_m$, and the process goes back to S10.

S99: When the predetermined time or number of times for calculation is reached, the control section 10 stops and outputs the best parameter. The control section 10 outputs a model parameter P with a combination of component parameters that shows the highest fitness among the parent population of parameters $\{p_1, p_2, ..., p_n\}_m$ calculated as a final solution.

The method of this embodiment will be referred to as Method 3. Method 3 is used for fitness evaluation for extracting an optimized model parameter P corresponding to the observed data $I_d$.

The observed data $I_d$ is assumed to be the function of the variable x, and have a value $I_d=\{I_d(x_1), ..., I_d(x_k)\}$, which corresponds to a set of variables x, $x=\{x_1, ..., x_k\}$, which are sampled at regular or irregular intervals.

Then, the optimized model parameter P is defined as $P=(p_1, p_2, ..., p_n)$, and assumed to consist of n component parameters $(p_1, p_2, ..., p_n)$.

Now, it should be noted that the fitness evaluation here evaluates the level of matching between the observed data $I_d$ and a model evaluated value $f(P, x)$ calculated based on the parameter P and the variable x, thereby evaluating the level of matching between a value $I_d=\{I_d(x_1), ..., I_d(x_k)\}$ and a value $\{f(P, x_1), ..., f(P, x_k)\}$.

Now, the fitness evaluation of this embodiment is performed by the following method.

At an arbitrary evaluation point $x_i$ and an adjacent evaluation point $x_{i+1}$ (i = 1~k-1), observed data $I_d(x_i)$ and

$I_d$ ($x_{i+1}$) corresponding to the respective points are selected. Then, the model evaluated values f(P, $x_i$) and f(P, $x_{i+1}$) are calculated.

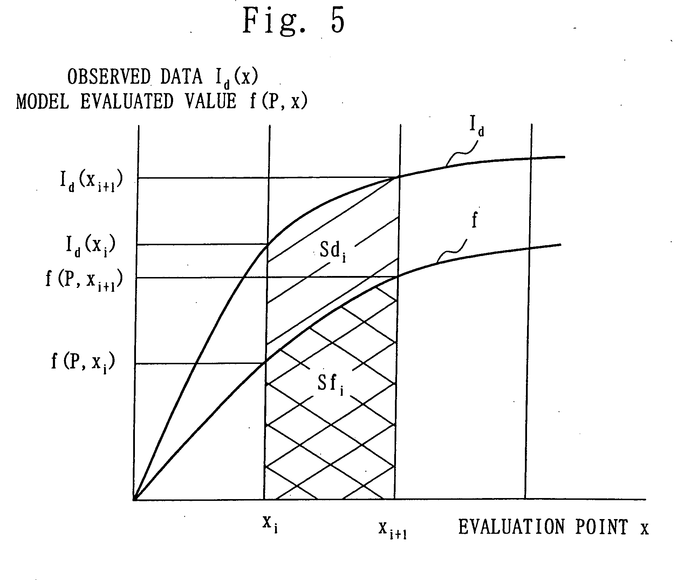

Then, according to the trapezoid formula, areas Sd that is enclosed by the function $I_d$ showing observed data and Sf that is enclosed by a model function are calculated as shown in Fig. 5. In Fig. 5, the horizontal axis indicates evaluation points x. The vertical axis in Fig. 5 indicates the observed data $I_d$ (x) or the model evaluated values f(P, x).

Specifically, the calculations are as follows.

$$Sd_i = (I_d(x_{i+1}) + I_d(x_i)) * (x_{i+1}-x_i) / 2$$

$$Sf_i = (f(P, x_{i+1}) + f(P,x_i)) * (x_{i+1}-x_i) / 2$$

More specifically, the area calculation section 22 calculates the size of an area that is formed by a lower value of the variable value string, a higher value of the variable value string, the observed data string, and the X-axis, as an area size $Sd_i$ based on observed data, in a two dimensional coordinate graph where the X-axis indicates the variable value string, and the Y-axis indicates the observed data string. The area calculation section 22 also calculates the size of an area that is formed by a lower value of the variable value string, a higher value of the variable value string, the model evaluated value string, and the X-axis, as an area size $Sf_i$ based on model parameter, in a two dimensional coordinate graph where the X-axis indicates the variable value string, and the Y-axis indicates the model evaluation value string. Then, the area calculation section 22 stores the area size $Sd_i$ based on observed data and the area size $Sf_i$ based on model parameter in the storage section.

Now, a difference between $Sd_i$ and $Sf_i$ for each every i (i = 1~k-1) is obtained as an evaluated value of fitness. Then, all the differences obtained are added to find the fitness g of the parameter P. The following is the formula.

**[Equation 2]**

$$g = \sum_{i=1}^{k-1} (Sd_i - Sf_i)$$

Specifically, the fitness evaluation section 23 retrieves the area size $Sd_1$ based on observed data and the area size $Sf_1$ based on model parameter from the storage section, and stores a difference between $Sd_i$ and $Sf_i$ in the storage section as the fitness. This is equivalent to the following process. In the two-dimensional coordinate graph where the X-axis indicates the variable value string and the Y-axis indicates the observed data string, the size of an area formed by a maximum value in the variable value string, a minimum value in the variable value string, the observed data string, and the X-axis, is calculated as the size of the area based on observed data. Then, in the two-dimensional coordinate graph where the X-axis indicates the variable value string and the Y-axis indicates the model evaluation value string, the size of an area formed by a maximum value in the variable value string, a minimum value in the variable value string, the model evaluation value string, and the X-axis, is calculated as the size of the area based on model parameter. Then, the size of the area based on observed data and the size of the area based on model parameter are calculated and a difference between the sizes of the areas is stored in the storage section as the fitness of the model parameter.

As mentioned above, Method 3 is an optimization method used for fitness evaluation based on a model evaluated value string, which corresponds to the observed data string that has values corresponding to the variable value string sampled at regular or irregular intervals. The model evaluated value string is calculated based on a model parameter and the variable value string. Then, the optimization method uses the difference, as the fitness of a parameter, between the area that is calculated based on the variable value string and the corresponding observed data string and the area that is calculated based on the variable value string and the model evaluated value string that is obtained based on parameters.

A description will now be given of Method 3 of this embodiment in comparison with Methods 1 and 2 of the conventional art.

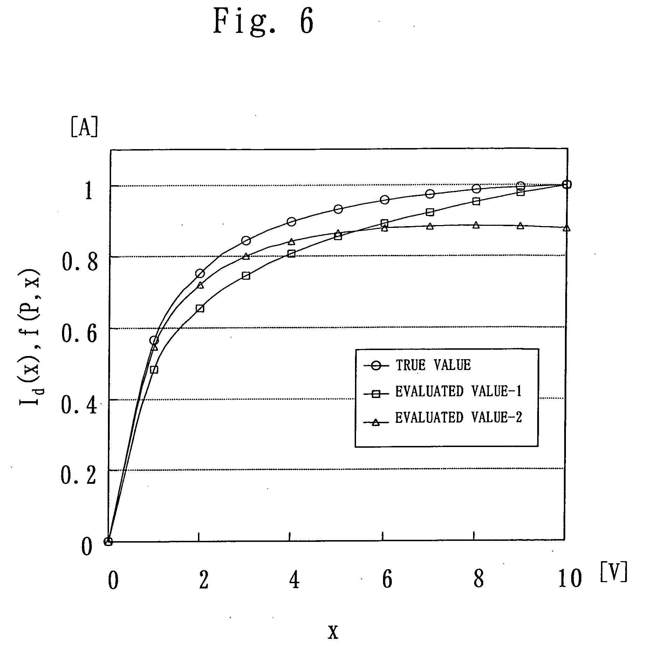

Fig. 6 is a diagram illustrating a relationship between an applied voltage (V (volt)) and a value (A (ampere)) of electrical characteristics of a device. The horizontal axis indicates an applied voltage x. The vertical axis indicates a value $I_d$(x) of electrical characteristics of a device and f(P, x). A circle indicates observed data, i.e., a true value $I_d$(x). A square indicates an evaluated value-1. A triangle indicates an evaluated value-2. The evaluated value-1 and the evaluated value-2 are different values of f(P,x) that have different component parameters from each other.

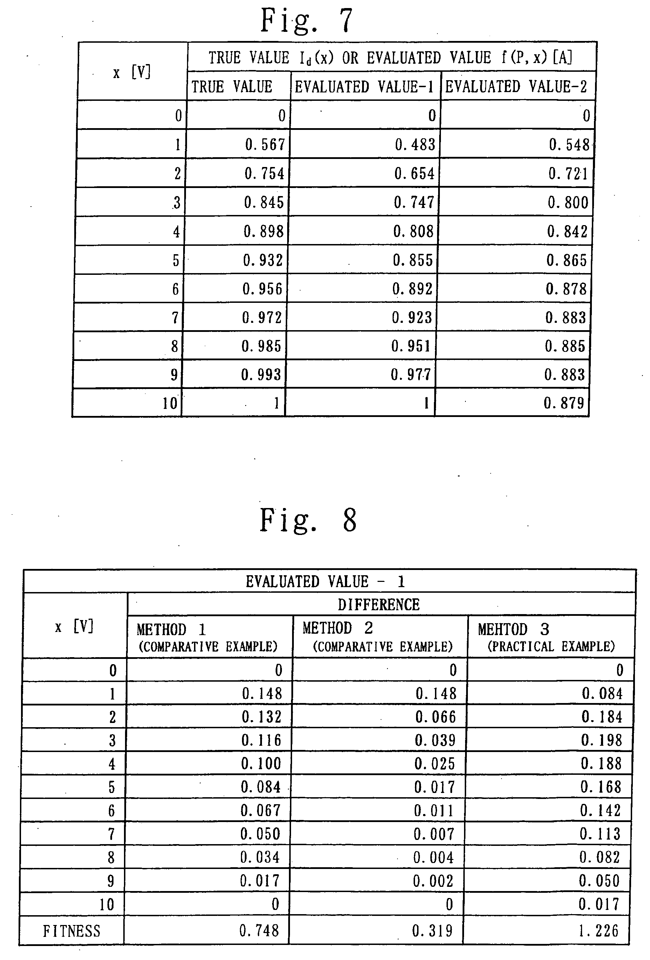

Fig. 7 is a chart of numerical values of the true values, evaluated values-1, and evaluated values-2 shown in Fig. 6. Each row in the chart of Fig. 7 includes a true value, an evaluated value-1 and an evaluated value-2 under each of the applied voltage x.

Fig. 8 is a chart of differences between true values and values obtained by assigning the evaluated values-1 with Methods 1, 2, and 3, respectively.

Values in each line of Fig. 8 at each applied voltage x are obtained by the following calculations.

[Equation 3]

With Method 1, the value is obtained by $\frac{I_d - (P, x_i)}{I_d}$.

With Method 2, the value is obtained by $\frac{I_d - f(P, x_i)}{(x_i - x_{i-1}) \cdot f(P, x_i)}$.

With Method 3, the value is obtained by $Sd_i - Sf_i$.

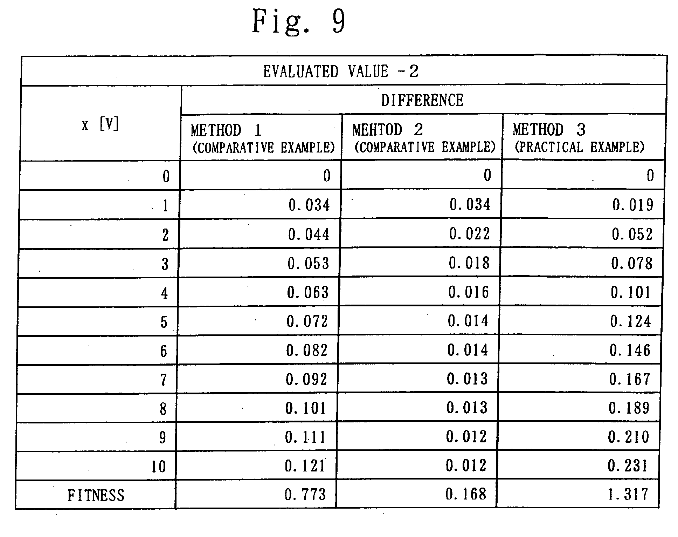

Fig. 9 is a chart of differences between true values and values obtained by assigning evaluated values-2 with Methods 1, 2 and 3, respectively.

Values in each line of Fig. 9 at each applied voltage x are obtained by the following calculations.

[Equation 4]

With Method 1, the value is obtained by $\frac{I_d - f(P, x_i)}{I_d}$.

With Method 2, the value is obtained by $\frac{I_d - f(P, x_i)}{(x_i - x_{i-1}) \cdot (P, x_i)}$.

With Method 3, the value is obtained by $Sd_i - Sf_i$.

Figs. 6, 7, 8 and 9 show the cases in which x is set at regular intervals.

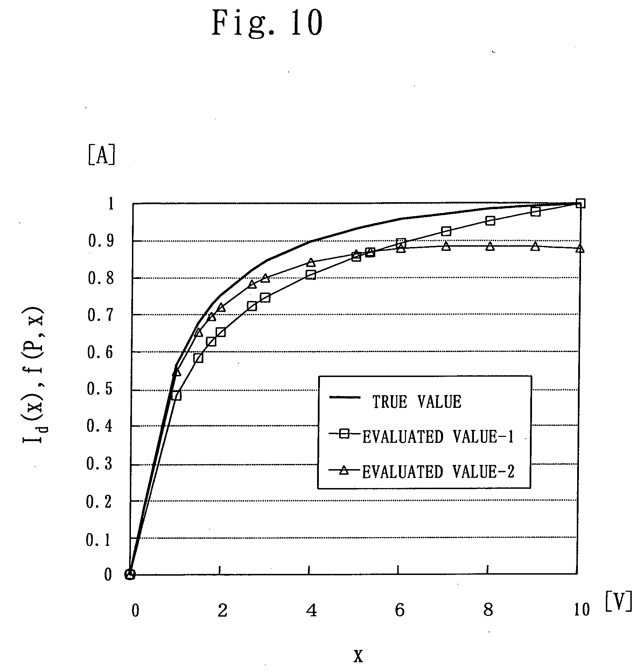

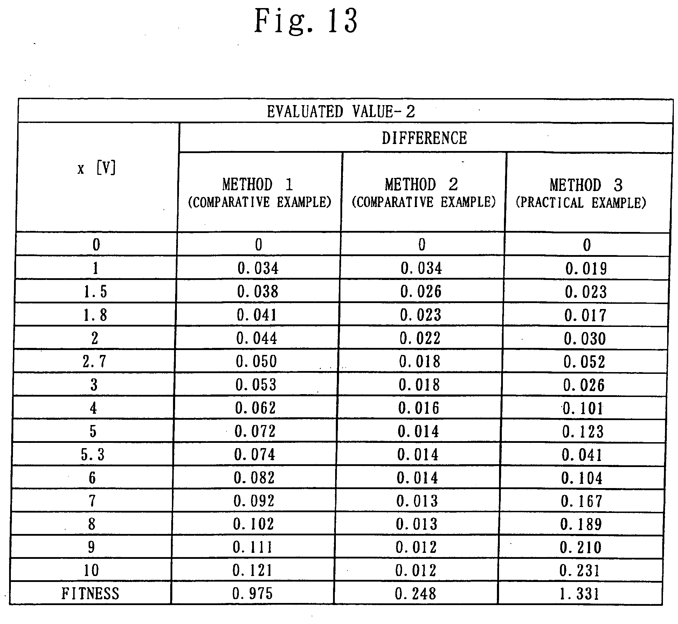

Figs. 10, 11, 12, and 13 show the cases in which x is set at irregular intervals, and correspond to Figs. 6, 7, 8 and 9, respectively, with regular intervals.

The following are conditions assumed for purposes of illustration.

It is assumed that the electrical characteristics to be optimized is the function of voltage x, and the electrical characteristics of an observed device is a value shown as the true value of Fig. 7. Besides, two sets of parameters are produced as a newly produced population of parameters, and fitness is evaluated for the two sets of parameters. Then, it is assumed that the evaluated value f(P, x) that is calculated based on a set of parameters with higher fitness is the one that is calculated as the evaluated value-1 of Fig. 7. Then, the evaluated value f(P, x) calculated based on the other set of parameters with lower fitness is assumed to be the one that is calculated as the evaluated value-2 of Fig. 7.

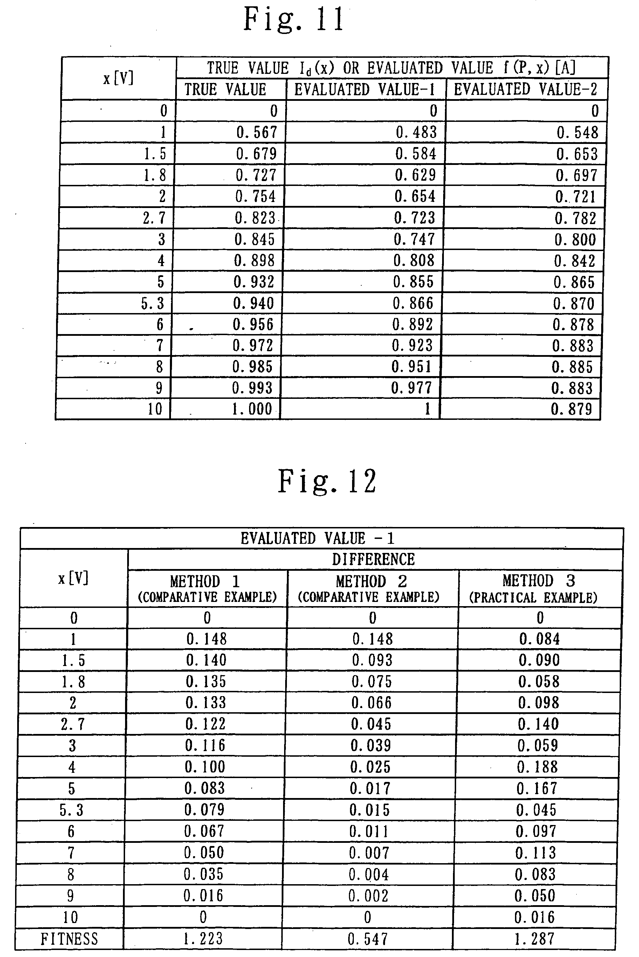

Now, if the interval x is changed, it is also assumed that f(P, x) is calculated as the evaluated value-1 of Fig. 11 and the evaluated value-2 of Fig. 11.

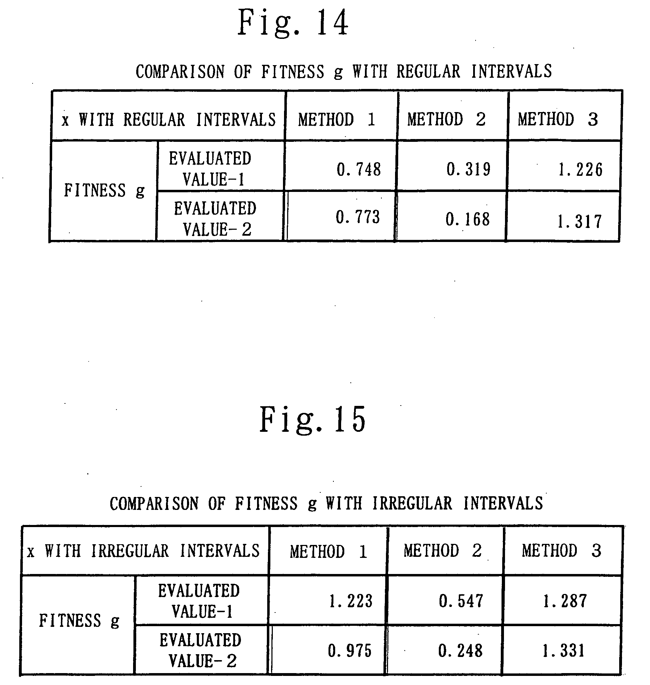

Fig. 14 shows fitness g evaluated based on the results from Fig. 7 through Fig. 9 with Method 1 and Method 2 of the conventional art and Method 3 of this embodiment, respectively. Fig. 15 shows fitness g evaluated based on the results from Fig. 11 through Fig. 13 with Method 1 and Method 2 of the conventional art and Method 3 of this embodiment, respectively.

The following are results of comparisons of fitness evaluated. With the case of the regular interval x of Fig. 7, the values of fitness g of Fig. 14 are as follows.

With Method 1: a value obtained by the evaluated value-1 assigned < a value obtained by the evaluated value-2 assigned

With Method 2: a value obtained by the evaluated value-1 assigned > a value obtained by the evaluated value-2 assigned

It is to be noted here that the evaluated value-1 is a calculated value based on a parameter with high fitness. Therefore, fitness g may be obtained with accuracy in the case where a value obtained with the evaluated value-1 assigned is smaller than a value obtained with the evaluated value-2 assigned.

This indicates that Method 1 gives an accurate result, and Method 2 gives an inaccurate one.

On the other hand, with the case of irregular interval x of Fig. 11, the values of fitness g of Fig. 15 are as follows.

With Method 1: a value obtained by the evaluated value-1 assigned > a value obtained by the evaluated value-2 assigned

With Method 2: a value obtained by the evaluated value-1 assigned > a value obtained by the evaluated value-2 assigned

This shows that both Method 1 and Method 2 give inaccurate results. This proves that dependency on the interval x causes a change in the result of evaluation.

It is an object to solve the x dependency problem of the result of fitness evaluation. Fitness may be determined by visual judgement under a graph in human sense. From this point of view, fitness is evaluated with Method 3 performing a difference evaluation between areas f(P,x) and $I_d$. The following are results of comparisons of fitness evaluated accordingly.

With the case of regular interval x of Fig. 7, the values of fitness g of Fig. 14 are compared as follows.

With Method 3: a value obtained by the evaluated value-1 assigned < a value obtained by the evaluated value-2 assigned

With the case of irregular interval x of Fig. 11, the values of fitness g of Fig. 15 are compared as follows.

With Method 3: a value obtained by the evaluated value-1 assigned < a value obtained by the evaluated value-2 assigned Thus, the proposed method (Method 3) allows selecting accurate fitness in every case.

Embodiment 2.

According to a second embodiment, the configuration is the same as that according to the first embodiment. A description will now be given mainly of differences between the embodiments.

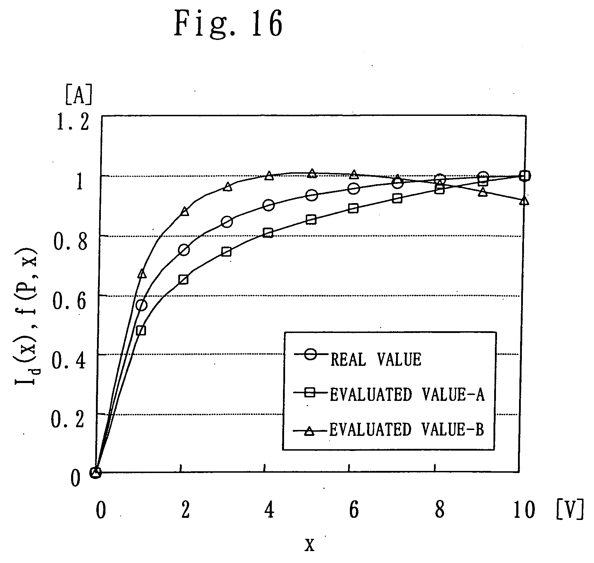

With Method 3 of the first embodiment as well as Method 1 and Method 2 of the conventional art, the x dependency of the true values and the estimated values may cause incorrect estimation of fitness g in case of the relationship of the true value and the evaluated value-B crossing along the line in Fig. 16. Accordingly, another method is proposed to evaluate fitness g based on the areas enclosed with the estimated values and the true values. More specifically, the process is the same as that of the first embodiment until $Sd_j$ and $Sf_j$ are obtained. Then, the absolute value of a difference between $Sd_j$ and $Sf_j$ is obtained, and then added with every i (i=1~n) to obtain fitness g. The following is the formula.

**[Equation 5]**

$$g = \sum_{i=1}^{k-1} \left| Sd_i - Sf_i \right|$$

In other words, the fitness evaluation section 23 evaluates fitness by obtaining a value by integrating the absolute value of a difference between the observed data string and the model evaluated value string. This method according to this embodiment will be referred to hereinafter as Method 4.

Fig. 16 is a diagram illustrating a relationship between an applied voltage x and a value $I_d$ of electrical characteristics of a device. The horizontal axis indicates the applied voltage x. The vertical axis indicates the value $I_d$ of electrical characteristics of a device. A circle indicates the observed data, i.e., a true value. A square indicates the evaluated value-A that is calculated with a high-fitness parameter set. A triangle indicates the evaluated value-B that is calculated with a low-fitness parameter set.

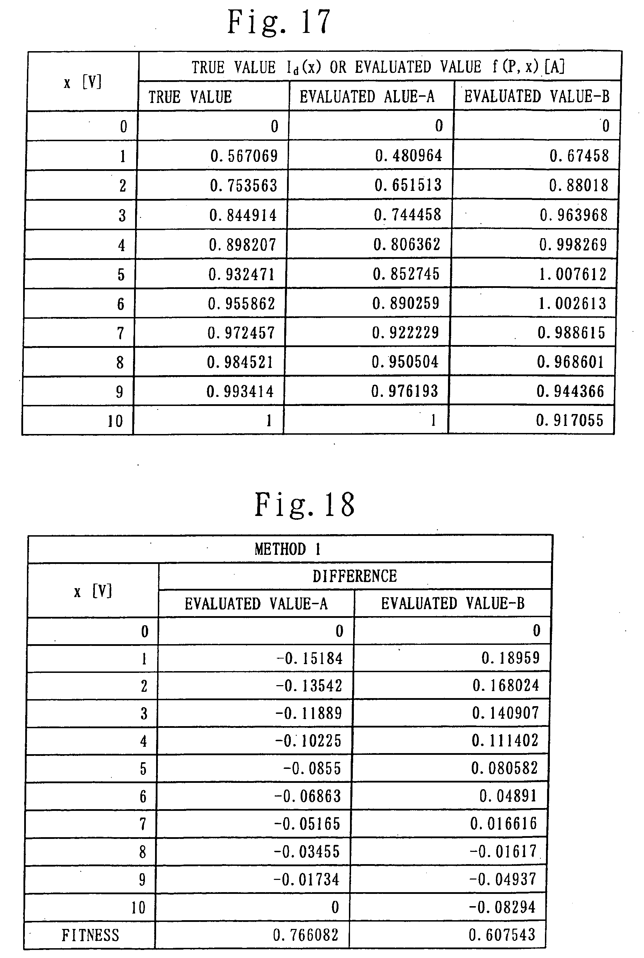

Fig. 17 is a chart of numerical values of the true values, the evaluated values-A and the evaluated values-B shown in Fig. 16.

Fig. 18 is a chart with Method 1 illustrating differences between true values and values obtained by assigning the evaluated values-A or the evaluated values-B.

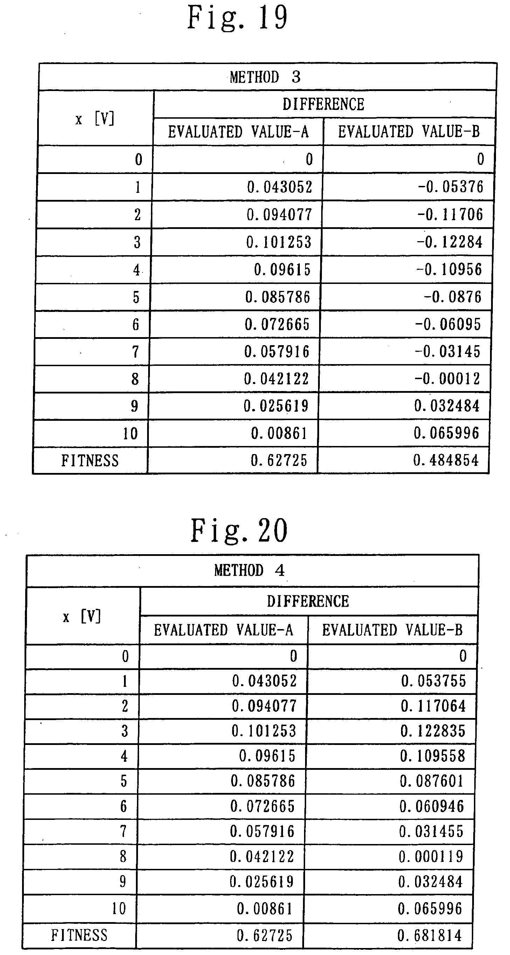

Fig. 19 is a chart with Method 3 illustrating differences between true values and values obtained by assigning the evaluated values-A or the evaluated values-B.

Fig. 20 is a chart with Method 4 illustrating differences between true values and values obtained by assigning the evaluated values-A or the evaluated values-B.

As shown in Fig. 18 and Fig. 19, minus values appear with Method 1 and Method 3 while only plus values appear with Method 4 as shown in Fig. 20.

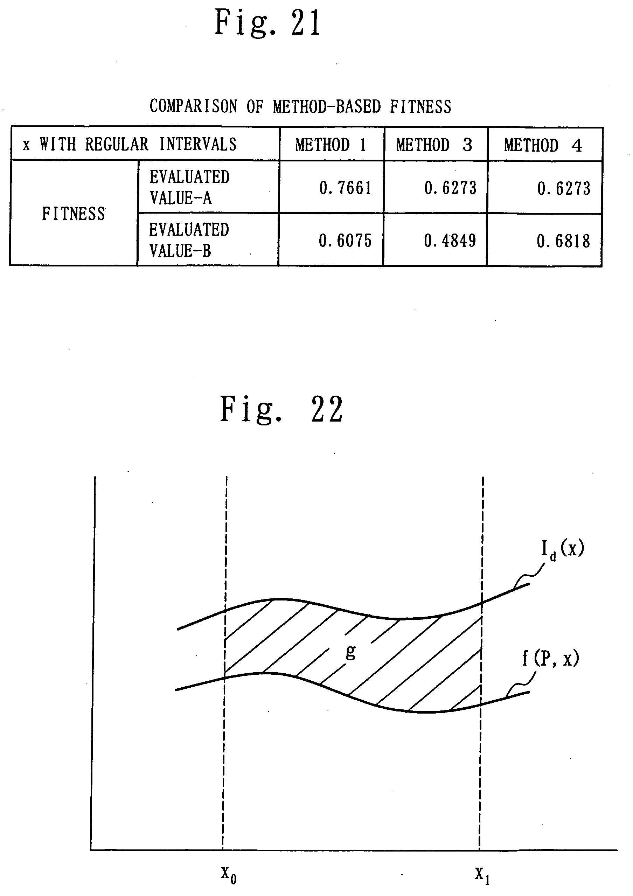

Fig. 21 shows an effect in the case of using the proposed Method 4 of this embodiment.

The following shows the values of fitness g that are obtained through Methods 1, 3 and 4, respectively.

With Method 1 or Method 3: a value obtained by assigning the evaluated value-A > a value obtained by assigning the evaluated value-B

With Method 4: a value obtained by assigning the evaluated value-A < a value obtained by assigning the evaluated value-B

It is to be noted here that the evaluated value-A is a calculated value based on a parameter with high fitness. Therefore, fitness g may be obtained with accuracy in the case where a value obtained with the evaluated value-A assigned is smaller than a value obtained with the evaluated value-B assigned.

This indicates that the proposed method of this embodiment (Method 4) allows selecting an accurate fitness even in the case that the relationship between the true value and the evaluated value changes in mid-course.

Embodiment 3.

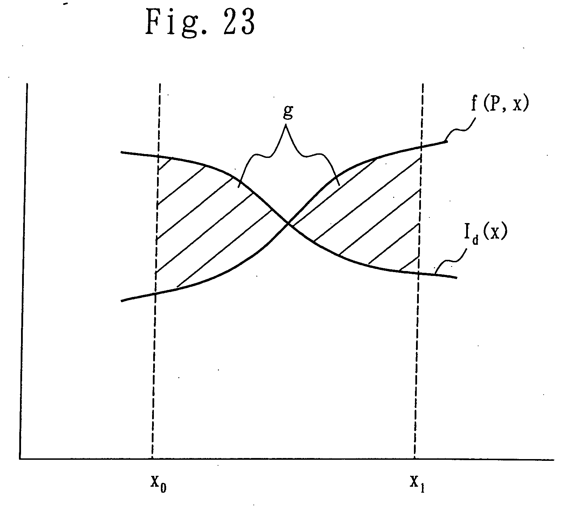

With the calculation formula of Method 3 of the first embodiment and that of Method 4 of the second embodiment, the area of a trapezoid is calculated and approximated by the area of function. With the following integral formula, however, the area can be obtained accurately as shown in Fig. 22 and Fig. 23.

**[Equation 6]**

$$\text{Method 3}: \quad g = \int_{x_0}^{x_1} I_d(x)\,dx - \int_{x_0}^{x_1} f(P,x)\,dx$$

$$\text{Method 4}: \quad g = \int_{x_0}^{x_1} \left| I_d(x) - f(P,x) \right|\,dx$$

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1.   A fitness function circuit (15) used for genetic algorithms, the fitness function circuit (15) receiving a model parameter, obtaining a model evaluated value, and outputting fitness for a specific problem,the fitness function circuit (15) comprising:

an evaluated value calculation section (21), receiving the model parameter, for obtaining the model evaluated value based on the model parameter received, and storing the model evaluated value in a storage section (17);
an area calculation section (22) for reading the model evaluated value stored in the storage section (17) by the evaluated value calculation section (21), calculating a size of an area that is formed by the model evaluated value read, and storing the size of the area in the storage section (17); and
a fitness evaluation section (23) for reading the size of the area stored in the storage section (17) by the area calculation section (22), evaluating the fitness of the model parameter based on the size of the area read, and storing the fitness in the storage section (17).

2.   The fitness function circuit (18) of claim 1, wherein the area calculation section (22) calculates an area based on a true value and an area based on the model evaluated value, and stores the areas in the storage section (17), and
wherein the fitness evaluation section (23) evaluates the fitness according to a difference between the area based on the true value and the area based on the model evaluated value.

3.   The fitness function circuit (15) of claim 1, wherein the evaluated value calculation section (21) calculates a model evaluated value $f(P, x_i)$ based on a model parameter P and a variable value $x_i$ where P denotes a model parameter that has n components $\{p_1, p_2, ..., p_n\}$, x denotes a variable, $x_i$ denotes a variable value, f denotes a function with variables of the model parameter P and the variable value $x_i$, and $f(P, x_i)$ denotes the model evaluated value;
wherein the area calculation section (22) calculates, for every i, a first area that is based on the variable value $x_i$, a variable value $x_{i+1}$, a true value $I_d(x_i)$ and a true value $I_d(x_{i+1})$ and a second area that is based on the variable value $x_i$, the variable value $x_{i+1}$, the model evaluated value $f(P, x_i)$ and a model evaluated value $f(P, x_{i+1})$ where $I_d(x_i)$ denotes the true value of the variable value $x_i$, g denotes the fitness, and i=1, 2, ..., k; and

wherein the fitness evaluation section (23) calculates a difference between the first area and the second area and calculates a sum of differences between the areas calculated for the every i as the fitness.

4. The fitness function circuit (15) of claim 1, wherein the area calculation section(22) calculates an area enclosed with a true value and the model evaluated value, and stores the area enclosed with the true value and the model evaluated value in the storage section(17), and

wherein the fitness evaluation section (23) evaluates the fitness based on the area enclosed with the true value and the model evaluated value.

5. The fitness function circuit (15) of claim 1, wherein the evaluated value calculation section (21) calculates a model evaluated value $f(P, x_i)$ based on a model parameter P and a variable value $x_i$ where P denotes a model parameter that has n components $\{p_1, p_2, ..., p_n\}$, x denotes a variable, $x_i$ denotes a variable value, f denotes a function with variables of the model parameter P and the variable value $x_i$, and $f(P, x_i)$ denotes the model evaluated value;

wherein the area calculation section (22) calculates, for every i, a first area that is based on the variable value $x_i$, a variable value $x_{i+1}$, a true value $I_d(x_i)$ and a true value $I_d(X_{i+1})$ and a second area that is based on the variable value $x_i$, the variable value $x_{i+1}$, the model evaluated value $f(P,x_i)$ and a model evaluated value $f(P,x_{i+1})$ where $I_d(x_i)$ denotes the true value of the variable value $x_i$, g denotes the fitness, and i=1, 2, ..., k; and

wherein the fitness evaluation section (23) calculates a difference between the first area and the second area and calculates a sum of absolute values of differences between the areas calculated for the every i as the fitness.

6. A genetic algorithmmachine (900), which executes a genetic algorithm using a model parameter, comprising:

a population memory (11) for storing a population of model parameters (42) having fitness (41);
a select section (12) for selecting a parent model parameter from among the population of model parameters (42) stored in the population memory (11);
a crossover module (13) for crossing parent model parameters selected by the select section (12) and producing an offspring model parameter; and
a fitness function circuit (15) for evaluating the fitness for a specific problem of the offspring model parameter obtained from the crossing by the crossover module(13),

wherein the fitness function circuit (15) includes,
an evaluated value calculation section (21), receiving the offspring model parameter, for calculating k model evaluated values based on the offspring model parameter received, and storing the k model evaluated values in a storage section (17);
an area calculation section (22) for reading a model evaluated value stored in the storage section (17) by the evaluated value calculation section (21), calculating a size of an area formed by the model evaluated value read, and storing the size of the area in the storage section(17); and
a fitness evaluation section (23)for reading the size of the area stored in the storage section (17) by the area calculation section(22), evaluating the fitness of the offspring model parameter based on the size of the area read, and storing the fitness in the storage section(17).

7. A fitness evaluation method used by a fitness function circuit (15) installed in a genetic algorithm machine (900), comprising:

retrieving a variable value string and an observed data string corresponding to the variable value string from a storage section(17), calculating a size of an area based on observed data using the variable value string and the observed data string, and storing the size of the area based on the observed data calculated in the storage section(17);
retrieving the variable value string and a model parameter from the storage section (17), calculating amodel evaluatedvalue string using the variable value string and the model parameter, calculating a size of an area based on the model parameter using the variable value string and the model evaluated value string, and storing the size of the area based on the model parameter calculated in the storage section(17); and
retrieving from the storage section (17)the size of the area based on the observed data and the size of the area based on the model parameter, evaluating fitness of the model parameter based on a difference between the sizes, and storing the fitness in the storage section(17).

8. The fitness evaluation method of claim 7, comprising:

calculating a size of an area formed by a minimum value of the variable value string, a maximum value of the variable value string, the observed data string, and an X-axis, according to a two-dimensional coordinate graph where the X-axis indicates the variable value string and a Y-axis indicates the observed data string, for the size of the area based on the observed data;

calculating a size of an area formed by the minimum value of the variable value string, the maximum value of the variable value string, the model evaluated value string, and an X-axis, according to a two-dimensional coordinate graph where the X-axis indicates the variable value string and a Y-axis indicates the model evaluated value string, for the size of the area based on model parameter; and

storing the sizes in the storage section(17).

9. A fitness evaluation method used by a fitness function circuit(15) installed in a genetic algorithm machine (900), comprising:

retrieving a variable value sting and a model parameter from a storage section(17), and calculating a model evaluated value string based on the variable value sting and the model parameter;

retrieving an observed data string corresponding to the variable value string from the storage section(17); and

calculating fitness of the model parameter based on an absolute value of a difference between the observed data string and the model evaluated value string, and storing the fitness in the storage section(17).

10. The fitness evaluation method of claim 9, comprising:

evaluating the fitness by obtaining a value by integrating the absolute value of the difference between the observed data string and the model evaluated value string.

Fig. 1

EP 1 600 888 A2

901

905

906

907

940: INTERNET

942: LAN

941

GATEWAY

902

903

904

910 : SYSTEM UNIT

931

932

900 : GENETIC ALGORITHM MACHINE

# Fig. 2

MAGNETIC DISK DRIVE 920

900

912 : BUS

| 921 | OS |
| 922 | WINDOW SYSTEM |
| 923 | PROGRAM GROUP |
| 924 | FILE GROUP |

CPU 911

ROM 913
RAM 914
CRT 901
K/B 902
MOUSE 903
COMM 915
COMMUNICATION BOARD
FDD 904
CDD 905
PRINTER 906
SCANNER 907

# Fig. 3

900

## GENETIC ALGORITHM MACHINE

10

### CONTROL SECTION

11

### POPULATION MEMORY

| 42 MODEL PARAMETER | 41 FITNESS |
|---|---|
| $P_1$ | $g_1$ |
| $P_2$ | $g_2$ |
| . | . |
| . | . |
| . | . |
| $P_m$ | $g_m$ |

12

### SELECT SECTION

13

### CROSSOVER MODULE

14

### MUTATION OPERATOR

15 FITNESS FUNCTION CIRCUIT

21
#### EVALUATED VALUE CALCULATION SECTION

22
#### AREA CALCULATION SECTION

23
#### FITNESS EVALUATION SECTION

16
### POPULATION UPDATE SECTION

17

### STORAGE SECTION

43
PARENT MODEL PARAMETER FILE

44
OFFSPRING MODEL PARAMETER FILE

45
VARIALE VALUE STRING FILE $(x_1, x_2, ... x_k)$

31
REAL VALUE FILE (OBSERVED DATA STRING) $I_d(x_1), ..., I_d(x_k)$

EVALUATED VALUE FILE (MODEL EVALUATED VALUE STRING)

32
33
AREA VALUE FILE (AREA)

34
FITNESS FILE

# Fig. 4

START

PRODUCE POPULATION — S9

TIME OR NUMBER OF TIMES REACHED? — S10

YES → OUTPUT OPTIMAL MODEL PARAMETER — S99 → END

NO

SELECT PARENT MODEL PARAMETER — S11

PRODUCE OFFSPRING MODEL PARAMETER BY CROSSING PARENT MODEL PARAMETERS — S12

MUTATE OFFSPRING MODEL PARAMETER — S13

CALCULATE MODEL EVALUATED VALUE — S14

CALCULATE AREAS BASED ON REAL VALUE AND MODEL EVALUAGED VALUE — S15

EVALUATE FITNESS BASED ON AREA DIFFERENCE — S16

LOW ← FITNESS LEVEL — S17

HIGH

STORE PARAMETER IN POPULATION MEMORY — S18

# Fig. 5

OBSERVED DATA $I_d(x)$
MODEL EVALUATED VALUE $f(P, x)$

$I_d(x_{i+1})$

$I_d(x_i)$

$f(P, x_{i+1})$

$Sd_i$

$I_d$

$f$

$f(P, x_i)$

$Sf_i$

$x_i$     $x_{i+1}$     EVALUATION POINT x

# Fig. 6

# Fig. 7

| x [V] | TRUE VALUE $I_d(x)$ OR EVALUATED VALUE $f(P, x)$ [A] | | |
|---|---|---|---|
| | TRUE VALUE | EVALUATED VALUE-1 | EVALUATED VALUE-2 |
| 0 | 0 | 0 | 0 |
| 1 | 0.567 | 0.483 | 0.548 |
| 2 | 0.754 | 0.654 | 0.721 |
| 3 | 0.845 | 0.747 | 0.800 |
| 4 | 0.898 | 0.808 | 0.842 |
| 5 | 0.932 | 0.855 | 0.865 |
| 6 | 0.956 | 0.892 | 0.878 |
| 7 | 0.972 | 0.923 | 0.883 |
| 8 | 0.985 | 0.951 | 0.885 |
| 9 | 0.993 | 0.977 | 0.883 |
| 10 | 1 | 1 | 0.879 |

# Fig. 8

| | EVALUATED VALUE - 1 | | |
|---|---|---|---|
| x [V] | DIFFERENCE | | |
| | METHOD 1 (COMPARATIVE EXAMPLE) | METHOD 2 (COMPARATIVE EXAMPLE) | MEHTOD 3 (PRACTICAL EXAMPLE) |
| 0 | 0 | 0 | 0 |
| 1 | 0.148 | 0.148 | 0.084 |
| 2 | 0.132 | 0.066 | 0.184 |
| 3 | 0.116 | 0.039 | 0.198 |
| 4 | 0.100 | 0.025 | 0.188 |
| 5 | 0.084 | 0.017 | 0.168 |
| 6 | 0.067 | 0.011 | 0.142 |
| 7 | 0.050 | 0.007 | 0.113 |
| 8 | 0.034 | 0.004 | 0.082 |
| 9 | 0.017 | 0.002 | 0.050 |
| 10 | 0 | 0 | 0.017 |
| FITNESS | 0.748 | 0.319 | 1.226 |

# Fig. 9

| EVALUATED VALUE -2 | | | |
|---|---|---|---|
| x [V] | DIFFERENCE | | |
| | METHOD 1 (COMPARATIVE EXAMPLE) | MEHTOD 2 (COMPARATIVE EXAMPLE) | METHOD 3 (PRACTICAL EXAMPLE) |
| 0 | 0 | 0 | 0 |
| 1 | 0.034 | 0.034 | 0.019 |
| 2 | 0.044 | 0.022 | 0.052 |
| 3 | 0.053 | 0.018 | 0.078 |
| 4 | 0.063 | 0.016 | 0.101 |
| 5 | 0.072 | 0.014 | 0.124 |
| 6 | 0.082 | 0.014 | 0.146 |
| 7 | 0.092 | 0.013 | 0.167 |
| 8 | 0.101 | 0.013 | 0.189 |
| 9 | 0.111 | 0.012 | 0.210 |
| 10 | 0.121 | 0.012 | 0.231 |
| FITNESS | 0.773 | 0.168 | 1.317 |

# Fig. 10

# Fig. 11

| x [V] | TRUE VALUE $I_d(x)$ OR EVALUATED VALUE $f(P, x)$ [A] | | |
|---|---|---|---|
| | TRUE VALUE | EVALUATED VALUE-1 | EVALUATED VALUE-2 |
| 0 | 0 | 0 | 0 |
| 1 | 0.567 | 0.483 | 0.548 |
| 1.5 | 0.679 | 0.584 | 0.653 |
| 1.8 | 0.727 | 0.629 | 0.697 |
| 2 | 0.754 | 0.654 | 0.721 |
| 2.7 | 0.823 | 0.723 | 0.782 |
| 3 | 0.845 | 0.747 | 0.800 |
| 4 | 0.898 | 0.808 | 0.842 |
| 5 | 0.932 | 0.855 | 0.865 |
| 5.3 | 0.940 | 0.866 | 0.870 |
| 6 | 0.956 | 0.892 | 0.878 |
| 7 | 0.972 | 0.923 | 0.883 |
| 8 | 0.985 | 0.951 | 0.885 |
| 9 | 0.993 | 0.977 | 0.883 |
| 10 | 1.000 | 1 | 0.879 |

# Fig. 12

| | EVALUATED VALUE - 1 | | |
|---|---|---|---|
| x [V] | DIFFERENCE | | |
| | METHOD 1 (COMPARATIVE EXAMPLE) | METHOD 2 (COMPARATIVE EXAMPLE) | METHOD 3 (PRACTICAL EXAMPLE) |
| 0 | 0 | 0 | 0 |
| 1 | 0.148 | 0.148 | 0.084 |
| 1.5 | 0.140 | 0.093 | 0.090 |
| 1.8 | 0.135 | 0.075 | 0.058 |
| 2 | 0.133 | 0.066 | 0.098 |
| 2.7 | 0.122 | 0.045 | 0.140 |
| 3 | 0.116 | 0.039 | 0.059 |
| 4 | 0.100 | 0.025 | 0.188 |
| 5 | 0.083 | 0.017 | 0.167 |
| 5.3 | 0.079 | 0.015 | 0.045 |
| 6 | 0.067 | 0.011 | 0.097 |
| 7 | 0.050 | 0.007 | 0.113 |
| 8 | 0.035 | 0.004 | 0.083 |
| 9 | 0.016 | 0.002 | 0.050 |
| 10 | 0 | 0 | 0.016 |
| FITNESS | 1.223 | 0.547 | 1.287 |

# Fig. 13

| EVALUATED VALUE-2 | | | |
|---|---|---|---|
| | DIFFERENCE | | |
| x [V] | METHOD 1 (COMPARATIVE EXAMPLE) | METHOD 2 (COMPARATIVE EXAMPLE) | METHOD 3 (PRACTICAL EXAMPLE) |
| 0 | 0 | 0 | 0 |
| 1 | 0.034 | 0.034 | 0.019 |
| 1.5 | 0.038 | 0.026 | 0.023 |
| 1.8 | 0.041 | 0.023 | 0.017 |
| 2 | 0.044 | 0.022 | 0.030 |
| 2.7 | 0.050 | 0.018 | 0.052 |
| 3 | 0.053 | 0.018 | 0.026 |
| 4 | 0.062 | 0.016 | 0.101 |
| 5 | 0.072 | 0.014 | 0.123 |
| 5.3 | 0.074 | 0.014 | 0.041 |
| 6 | 0.082 | 0.014 | 0.104 |
| 7 | 0.092 | 0.013 | 0.167 |
| 8 | 0.102 | 0.013 | 0.189 |
| 9 | 0.111 | 0.012 | 0.210 |
| 10 | 0.121 | 0.012 | 0.231 |
| FITNESS | 0.975 | 0.248 | 1.331 |

# Fig. 14

COMPARISON OF FITNESS g WITH REGULAR INTERVALS

| x WITH REGULAR INTERVALS | | METHOD 1 | METHOD 2 | METHOD 3 |
|---|---|---|---|---|
| FITNESS g | EVALUATED VALUE-1 | 0.748 | 0.319 | 1.226 |
| | EVALUATED VALUE-2 | 0.773 | 0.168 | 1.317 |

# Fig. 15

COMPARISON OF FITNESS g WITH IRREGULAR INTERVALS

| x WITH IRREGULAR INTERVALS | | METHOD 1 | METHOD 2 | METHOD 3 |
|---|---|---|---|---|
| FITNESS g | EVALUATED VALUE-1 | 1.223 | 0.547 | 1.287 |
| | EVALUATED VALUE-2 | 0.975 | 0.248 | 1.331 |

Fig. 16

# Fig. 17

| x [V] | TRUE VALUE I_d(x) OR EVALUATED VALUE f(P,x) [A] | | |
|---|---|---|---|
| | TRUE VALUE | EVALUATED ALUE-A | EVALUATED VALUE-B |
| 0 | 0 | 0 | 0 |
| 1 | 0.567069 | 0.480964 | 0.67458 |
| 2 | 0.753563 | 0.651513 | 0.88018 |
| 3 | 0.844914 | 0.744458 | 0.963968 |
| 4 | 0.898207 | 0.806362 | 0.998269 |
| 5 | 0.932471 | 0.852745 | 1.007612 |
| 6 | 0.955862 | 0.890259 | 1.002613 |
| 7 | 0.972457 | 0.922229 | 0.988615 |
| 8 | 0.984521 | 0.950504 | 0.968601 |
| 9 | 0.993414 | 0.976193 | 0.944366 |
| 10 | 1 | 1 | 0.917055 |

# Fig. 18

| | METHOD 1 | |
|---|---|---|
| x [V] | DIFFERENCE | |
| | EVALUATED VALUE-A | EVALUATED VALUE-B |
| 0 | 0 | 0 |
| 1 | -0.15184 | 0.18959 |
| 2 | -0.13542 | 0.168024 |
| 3 | -0.11889 | 0.140907 |
| 4 | -0.10225 | 0.111402 |
| 5 | -0.0855 | 0.080582 |
| 6 | -0.06863 | 0.04891 |
| 7 | -0.05165 | 0.016616 |
| 8 | -0.03455 | -0.01617 |
| 9 | -0.01734 | -0.04937 |
| 10 | 0 | -0.08294 |
| FITNESS | 0.766082 | 0.607543 |

# Fig. 19

| METHOD 3 | | |
|---|---|---|
| x [V] | DIFFERENCE | |
| | EVALUATED VALUE-A | EVALUATED VALUE-B |
| 0 | 0 | 0 |
| 1 | 0.043052 | -0.05376 |
| 2 | 0.094077 | -0.11706 |
| 3 | 0.101253 | -0.12284 |
| 4 | 0.09615 | -0.10956 |
| 5 | 0.085786 | -0.0876 |
| 6 | 0.072665 | -0.06095 |
| 7 | 0.057916 | -0.03145 |
| 8 | 0.042122 | -0.00012 |
| 9 | 0.025619 | 0.032484 |
| 10 | 0.00861 | 0.065996 |
| FITNESS | 0.62725 | 0.484854 |

# Fig. 20

| METHOD 4 | | |
|---|---|---|
| x [V] | DIFFERENCE | |
| | EVALUATED VALUE-A | EVALUATED VALUE-B |
| 0 | 0 | 0 |
| 1 | 0.043052 | 0.053755 |
| 2 | 0.094077 | 0.117064 |
| 3 | 0.101253 | 0.122835 |
| 4 | 0.09615 | 0.109558 |
| 5 | 0.085786 | 0.087601 |
| 6 | 0.072665 | 0.060946 |
| 7 | 0.057916 | 0.031455 |
| 8 | 0.042122 | 0.000119 |
| 9 | 0.025619 | 0.032484 |
| 10 | 0.00861 | 0.065996 |
| FITNESS | 0.62725 | 0.681814 |

# Fig. 21

COMPARISON OF METHOD-BASED FITNESS

| x WITH REGULAR INTERVALS | | METHOD 1 | METHOD 3 | METHOD 4 |
|---|---|---|---|---|
| FITNESS | EVALUATED VALUE-A | 0.7661 | 0.6273 | 0.6273 |
| | EVALUATED VALUE-B | 0.6075 | 0.4849 | 0.6818 |

# Fig. 22

$I_d(x)$

$g$

$f(P, x)$

$x_0$      $x_1$

# Fig. 23